# FASCICULE DE BREVET EUROPEEN

(11) **EP 4 153 406 B1**
(45) Date de publication et mention de la délivrance du brevet: **03.06.2026**
(21) Numéro de dépôt: 21731240.4
(22) Date de dépôt: 10.05.2021
(51) Int. Cl.: B29C 65/64, B22F 10/25, B22F 7/08, B33Y 10/00, B33Y 80/00, F02K 9/00, B29K 105/06

(54) **PROCÉDÉ D'ASSEMBLAGE D'UNE PREMIÈRE PARTIE MÉTALLIQUE AVEC UNE DEUXIÈME PARTIE EN MATERIAU COMPOSITE À MATRICE ORGANIQUE, ET PIÈCE RÉSULTANT D'UN TEL ASSEMBLAGE**
VERFAHREN ZUR MONTAGE EINES ERSTEN METALLTEILS MIT EINEM ZWEITEN TEIL AUS EINEM ORGANISCHEN MATRIXVERBUNDMATERIAL UND AUS EINER DERARTIGEN ANORDNUNG HERGESTELLTES TEIL
METHOD FOR ASSEMBLING A FIRST METAL PART WITH A SECOND PART MADE OF AN ORGANIC MATRIX COMPOSITE MATERIAL, AND PIECE MADE FROM SUCH AN ASSEMBLY

(30) Priorité: 20.05.2020 FR 2005271
(43) Date de publication de la demande: 29.03.2023
(73) Titulaire: ArianeGroup SAS, 78130 Les Mureaux (FR); Centre National d'Etudes Spatiales, 75001 Paris (FR)
(72) Inventeur: DU TERTRE, Alban, 27207 Vernon Cedex (FR); GUICHARD, Didier, 27207 Vernon Cedex (FR)
(74) Mandataire: Cabinet Beau de Loménie
(86) Numéro de dépôt international: PCT/FR2021/050804
(87) Numéro de publication internationale: WO 2021/234242

(56) Documents cités:
- EP-A1- 3 159 525
- EP-A1- 3 498 410
- GB-A- 2 550 966
- US-A- 5 570 573

## Description

### Domaine Technique

Le présent exposé concerne un procédé d'assemblage de deux parties d'une pièce, une partie étant métallique l'autre partie étant en matériau composite à matrice organique. Par exemple, une telle pièce peut être une enveloppe de chambre de combustion de moteur-fusée, mais pas uniquement.

### Technique antérieure

On connait des procédés d'assemblage d'une partie métallique avec une partie en matériau composite à matrice organique. Toutefois, ces procédés d'assemblage sont très souvent perfectibles. Il existe donc un besoin en ce sens. GB 2 550 966 A décrit un procédé de jonction utilisant des fixations formées in-situ.
EP 3 498 410 A1 décrit une structure de jonction.
EP 3 159 525 A1 décrit une chambre propulsive et un procédé de fabrication.
US 5 570 573 A décrit une chambre de combustion pour un propulseur avec une connexion étanche entre une paroi d'extrémité et une structure tubulaire composite.

### Exposé de l'invention

Un mode de réalisation concerne un procédé d'assemblage d'une première partie métallique avec une deuxième partie en matériau composite à matrice organique, la première partie présentant une première portion de raccord et la deuxième partie présentant une deuxième portion de raccord, le procédé comprenant les étapes de :
- faire se chevaucher la première portion de raccord et la deuxième portion de raccord, un trou traversant de la deuxième portion de raccord débouchant sur la première portion de raccord, le trou traversant présentant une paroi latérale,
- former une couche de protection au moins sur la paroi latérale du trou traversant,
- former un joint d'étanchéité entre la couche de protection et la première portion de raccord, et
- former par fabrication additive par dépôt par projection de poudre métallique entrainée par un gaz froid, également connu sous l'acronyme CGS pour « *Cold Gaz Spraying* » en anglais, un élément de fixation s'étendant dans le trou traversant, fixé sur la première portion de raccord, et enserrant la deuxième portion de raccord.

On comprend que la portion de raccord d'une partie est la portion qui est configurée pour être en contact et coopérer directement avec l'autre partie. Ainsi, une portion d'une partie qui ne coopère pas avec l'autre partie, par exemple qui n'est pas superposée avec, ou ne chevauche pas, la portion de raccord de l'autre partie, ne fait pas partie de la portion de raccord de ladite partie.

On comprend également que la deuxième portion de raccord présente un ou plusieurs trous traversant. Par la suite, et sauf indication contraire par « le trou traversant » on entend « le au moins un trou traversant ». Selon une première variante, le trou est formé en amont de la mise en œuvre du procédé, la deuxième portion de raccord présentant le trou traversant avant de faire se chevaucher les deux portions de raccord. Selon une deuxième variante, la deuxième portion de raccord ne présente pas de trou traversant en amont de la mise en œuvre du procédé, le trou traversant étant formé lors d'une étape intermédiaire après avoir fait se chevaucher les deux portions de raccord. Dans ce cas, un trou borgne peut être également formé dans la première portion de raccord lors de cette étape intermédiaire, mais pas nécessairement. On comprend qu'un trou borgne est un trou qui ne présente qu'un seul orifice et qui forme une concavité. Un tel trou borgne permet d'améliorer l'accroche de l'élément de fixation à la première portion de raccord. Dans le cas d'un trou borgne, la couche de protection peut par exemple s'étendre également sur les parois latérales du trou borgne et le joint d'étanchéité être formé entre la couche de protection et le fond du trou borgne.

On comprend qu'une fabrication additive par dépôt par projection de poudre métallique entrainée par un gaz froid est un mode de fabrication où le métal est déposé à une température inférieure à sa température de fusion. Un tel mode de dépôt est particulièrement adapté à l'assemblage de la deuxième partie car on s'assure que la température du métal lors du dépôt reste inférieure à la température de détérioration du matériau composite à matrice organique de la deuxième partie. Par la suite, et sauf indication contraire, par « dépôt CGS » on entend «fabrication additive par dépôt par projection de poudre métallique entrainée par un gaz froid».

Par exemple l'élément de fixation est dans une nuance de métal identique à celle de la première partie, mais pas nécessairement. L'élément de fixation enserre en tout ou partie la deuxième portion de raccord. En d'autres termes, la deuxième portion de raccord en prise, en tout ou partie, en sandwich entre l'élément de fixation et la première portion de raccord. L'élément de fixation peut présenter diverses formes. Par exemple, l'élément de fixation peut présenter la forme d'un pion, d'un pontet, d'une bride annulaire, etc.

On comprend que la couche de protection est une couche permettant de protéger la deuxième partie lors de la formation par dépôt CGS de l'élément de fixation. On comprend que le joint d'étanchéité raccorde de manière étanche la couche de protection et la première portion de raccord. Bien entendu, au moins une portion de surface de la première portion de raccord reste libre (i.e. n'est pas recouverte par le joint d'étanchéité ni par la couche de protection) depuis le trou traversant de manière à pouvoir former l'élément de fixation directement sur cette portion de surface libre, afin de fixer l'élément de fixation sur la première portion de raccord. Par la suite, et sauf indication contraire, par « joint » on entend « joint d'étanchéité ».

Les inventeurs se sont aperçus que lors de la formation de l'élément de fixation par dépôt CGS, dans les procédés de l'état de la technique notamment tels que celui décrit dans le document GB 2 550 966 A, une partie de la matière projetée pouvait s'échapper entre la première portion de raccord et la deuxième portion de raccord. Ceci entraine d'une part une abrasion de la deuxième portion de raccord (les particules métalliques qui s'échappent agressant le matériau composite de la deuxième partie), et d'autre part des défauts dans l'élément de fixation, notamment à l'interface élément de fixation/première portion de raccord. Les inventeurs ont constaté que ceci affaiblit la tenue mécanique de l'assemblage.

En formant un joint d'étanchéité entre la couche de protection et la première portion de raccord, la matière projetée lors du dépôt CGS ne peut plus s'échapper, de sorte que l'élément de fixation peut être formé sans défaut au niveau de sa jointure avec la première portion de raccord, et sans abîmer la deuxième portion de raccord. La tenue mécanique de l'assemblage est nettement améliorée par rapport aux assemblages obtenus à partir des procédés de l'état de la technique.

Par exemple, les parties peuvent être des plaques, planes ou courbes, et les portions de fixation peuvent former des brides, planes ou courbes.

Par exemple, la première partie et la deuxième partie forment chacune une plaque s'étendant selon une première direction et selon une deuxième direction, et présentant une épaisseur selon une troisième direction perpendiculaire à la première et à la deuxième direction, la première partie et la deuxième partie étant disposées côte à côte selon la première direction, le au moins un trou traversant s'étendant selon la troisième direction, la première et la deuxième portion de raccord se chevauchant l'une l'autre selon la première et la deuxième direction. La première et/ou la deuxième direction peuvent être rectilignes ou courbes, de manière similaire aux directions définies dans un repère cartésien, cylindrique ou sphérique.

Dans certains modes de réalisation, la couche de protection s'étend sur toute l'interface entre la deuxième portion de raccord et l'élément de fixation.

Par exemple, l'élément de fixation peut coopérer avec la deuxième partie sur d'autres surfaces que la surface latérale du trou. Dans ce cas, une couche de protection telle que définie ci-avant permet de parfaitement protéger la deuxième partie, sur toutes les surfaces configurées pour coopérer avec l'élément de fixation, lors de la formation de l'élément de fixation.

Dans certains modes de réalisation, on forme la couche de protection à l'aide d'une feuille métallique.

Par exemple la feuille métallique présente une forme initialement plane, est appliquée sur la deuxième portion de raccord, et est ensuite déformée de manière à épouser la forme de tout ou partie de la deuxième portion de raccord, notamment de la paroi latérale du trou. Par exemple, la feuille métallique est ensuite usinée, par exemple par fraisage, de manière à laisser un accès libre au fond du trou, i.e. à la première portion de raccord. Par exemple, la feuille métallique est en métal plus facilement déformable plastiquement que le matériau de la première et/ou de la deuxième portion de raccord. Par exemple, la feuille métallique est une feuille d'or, d'argent, d'aluminium, de cuivre, etc.

Dans certains modes de réalisation, on forme le joint d'étanchéité entre la feuille métallique et la première portion de raccord par dépôt métallique du type fabrication additive par dépôt métallique arc-fil ou « *metal arc wire* » en anglais.

Par la suite et sauf indication contraire par « dépôt arc-fil » on entend « fabrication additive par dépôt métallique arc-fil ». Un tel dépôt est très peu agressif, tant du point de vue thermique que de l'abrasion, pour le substrat sur lequel il s'applique, et est particulièrement bien adapté vis-à-vis de la deuxième partie et de la couche métallique. On assure ainsi l'intégrité de la couche métallique et de la deuxième partie, et donc au final la solidité de l'assemblage.

Un dépôt arc-fil permet une application directe de métal mou permettant de combler facilement les interstices/jeux et de former un joint d'étanchéité robuste et fiable.

Par exemple, le dépôt arc-fil recouvre l'ensemble des parois du trou, y compris le fond, et on usine ensuite, par exemple par fraisage, une partie du fond du trou de manière à laisser un accès libre au fond du trou, i.e. à la première portion de raccord, tout en préservant une portion du dépôt arc-fil s'étendant depuis la feuille métallique jusqu'à la première portion de raccord, cette portion formant le joint d'étanchéité. Par exemple, le métal du dépôt arc-fil est le même que le métal de la feuille métallique, mais pas nécessairement. Ceci peut permettre une adhérence satisfaisant entre la feuille métallique et le dépôt arc-fil.

Dans certains modes de réalisation, on forme simultanément la couche de protection et le joint d'étanchéité par au moins un dépôt métallique du type fabrication additive par dépôt métallique arc-fil ou « *metal arc wire* » en anglais.

Former la couche de protection et le joint d'étanchéité au cours d'une même étape, permet un gain de temps. De plus en réduisant le nombre d'étapes on réduit également le nombre d'interventions et donc le risque de détériorer la première et/ou la deuxième portion de raccord.

Dans certains modes de réalisation, on forme simultanément la couche de protection et le joint d'étanchéité par au moins deux dépôts métalliques, un premier dépôt étant un dépôt métallique du type fabrication additive par dépôt métallique arc-fil , et un deuxième dépôt étant un dépôt par projection de poudre métallique entrainée par un gaz froid réalisé sur le premier dépôt, le deuxième dépôt étant distinct de l'étape de fabrication additive par dépôt par projection de poudre métallique entrainée par un gaz froid pour former l'élément de fixation.

En d'autres termes, on forme la couche de protection et le joint en au moins deux passes : au moins une première passe par dépôt arc-fil et au moins une deuxième passe par dépôt CGS. Par exemple, on retire le métal du premier et du deuxième dépôt au fond du trou (tout en laissant une portion formant le joint d'étanchéité entre la première et la deuxième portion de raccord) avant de former l'élément de fixation. En d'autres termes, le joint et la couche de protection peuvent former dans cet exemple un seul et même élément continu. Par exemple, on utilise un même matériau, par exemple du cuivre, pour le premier dépôt et pour le deuxième dépôt, mais pas nécessairement. Par exemple, dans le cas d'une pièce à symétrie de révolution, la première couche et/ou la deuxième couche peut être un dépôt de couche continue circonférentielle.

Un mode de réalisation concerne un procédé de fabrication d'une enveloppe de chambre de combustion de moteur-fusée comprenant le procédé d'assemblage selon l'un quelconque des modes de réalisation décrits dans le présent exposé.

Le procédé d'assemblage selon le présent exposé est particulièrement bien adapté pour la fabrication d'enveloppe de chambre de combustion de moteur-fusée.

Un mode de réalisation concerne une pièce comprenant une première partie métallique et une deuxième partie en matériau composite à matrice organique assemblées l'une à l'autre par le procédé d'assemblage selon l'un quelconque des modes de réalisation décrits dans le présent exposé.

### Brève description des dessins

L'objet du présent exposé et ses avantages seront mieux compris à la lecture de la description détaillée faite ci-après de différents modes de réalisation donnés à titre d'exemples non limitatifs. Cette description fait référence aux pages de figures annexées, sur lesquelles :
[Fig. 1] La figure 1 représente une première étape du procédé d'assemblage.
[Fig. 2A-2B] Les figures 2A et 2B représentent respectivement deux variantes du procédé d'assemblage.
[Fig. 3A-3B] Les figures 3A et 3B représentent une deuxième étape du procédé d'assemblage, respectivement pour les deux variantes des figures 2A et 2B, selon un premier mode de réalisation.
[Fig. 4A-4B] Les figures 4A et 4B représentent une troisième étape du procédé d'assemblage, respectivement pour les deux variantes des figures 2A et 2B, selon le premier mode de réalisation.
[Fig. 5A-5B] Les figures 5A et 5B représentent une quatrième étape du procédé d'assemblage, respectivement pour les deux variantes des figures 2A et 2B, selon le premier mode de réalisation.
[Fig. 6A-6D] Les figures 6A, 6B, 6C et 6D représentent respectivement trois étapes intermédiaires pour réaliser simultanément la couche de protection et le joint d'étanchéité, respectivement pour les deux variantes des figures 2A et 2B, selon un deuxième mode de réalisation.
[Fig. 7A-7B] Les figures 7A et 7B représentent une cinquième étape du procédé d'assemblage, respectivement pour les deux variantes des figures 2A et 2B.
[Fig. 8] La figure 8 représente une enveloppe externe de chambre de combustion de moteur-fusée, obtenue à l'aide du procédé d'assemblage selon le premier ou le deuxième mode de réalisation.
[Fig. 9] La figure 9 représente un moteur-fusée équipé de l'enveloppe externe de chambre de combustion de moteur-fusée de la figure 8.

### Description des modes de réalisation

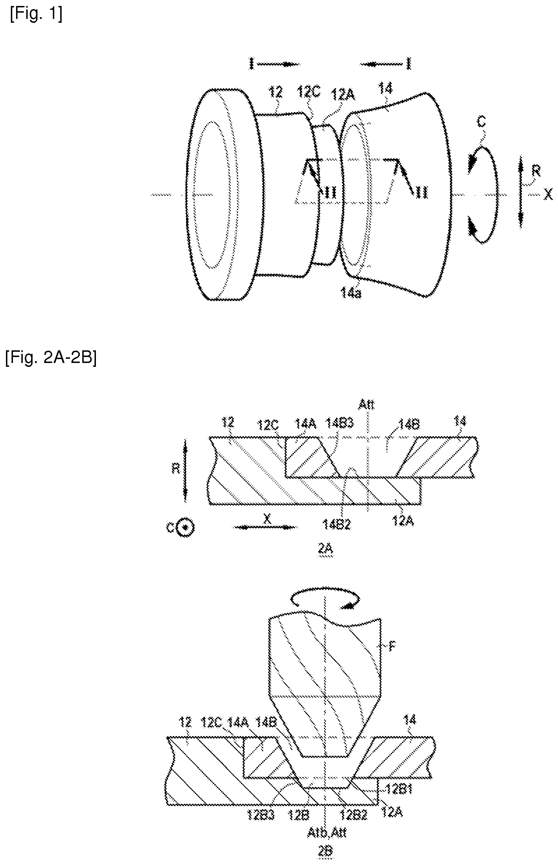

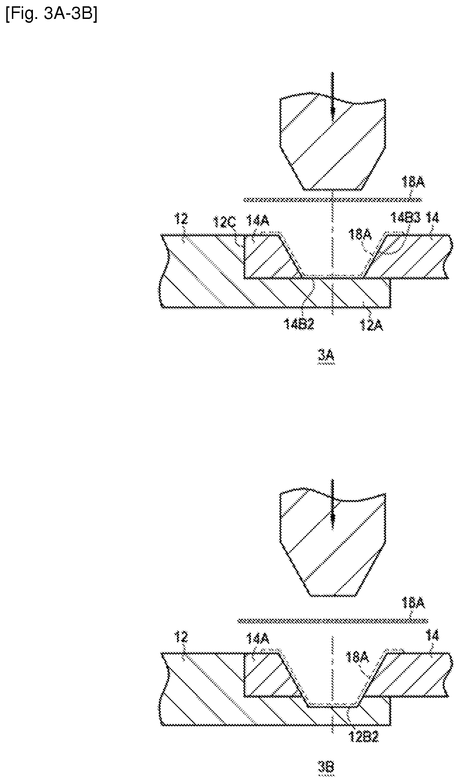

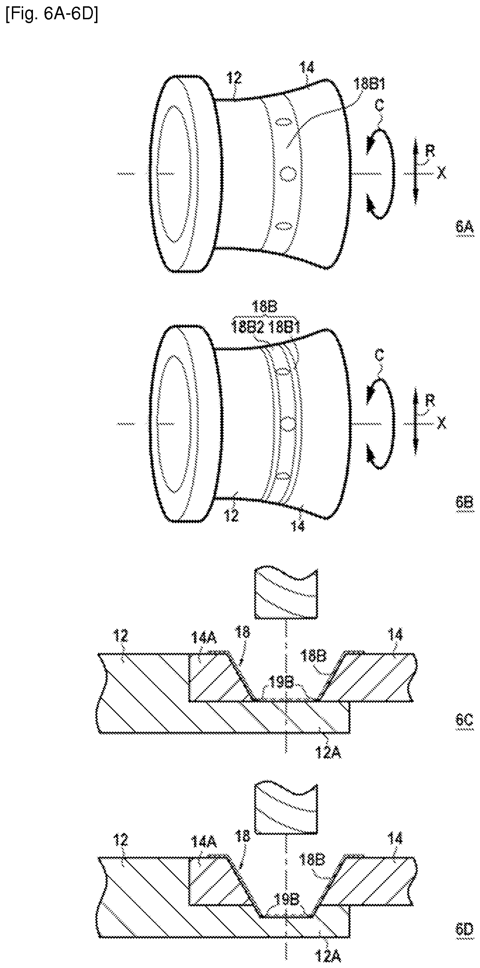

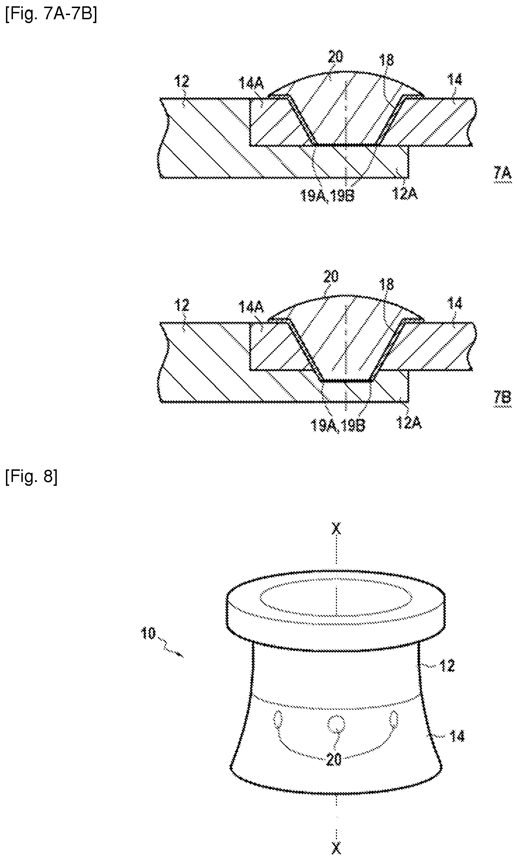

Pour la clarté du présent exposé, on note que les vues des figures sont très schématiques. Le procédé d'assemblage d'une première partie 12 métallique avec une deuxième partie 14 en matériau composite à matrice organique est décrit en référence aux figures 1 à 7. Par exemple, la première partie 12 est en alliage métallique par exemple en alliage à base de nickel tandis que la deuxième partie 14 est en matériau composite à matrice organique de type thermoplastique ou thermodurcissable. On note que les figures 2A, 2B, 3A, 3B, 4A, 4B, 5A, 5B, 6C et 6D sont des vues en coupe selon le plan II de la figure 1. Les première et deuxième étapes des figures 1, 2A et 2B, ainsi que la cinquième étape des figures 7A et 7B, sont communes au premier et au deuxième mode de réalisation, les figures 3A, 3B, 4A, 4B, 5A et 5B étant propres au premier mode de réalisation tandis que les figures 6A, 6B, 6C et 6D sont propres au deuxième mode de réalisation.

Dans cet exemple, les première et deuxième parties 12 et 14 sont des parties à symétrie de révolution. Plus particulièrement, les première et deuxième parties 12 et 14 ont chacune sensiblement une forme de plaque annulaire s'étendant selon une direction axiale X (axe de symétrie de révolution), une direction radiale R et une direction circonférentielle C. La direction radiale R est une direction perpendiculaire à l'axe X. La direction azimutale ou circonférentielle C correspond à la direction décrivant un anneau autour de la direction axiale X. Les trois directions axiale, radiale et azimutale correspondent respectivement aux directions définies par la côte, le rayon et l'angle dans un système de coordonnées cylindrique.

La première partie présente une première portion de raccord 12A comprenant un épaulement 12C. L'épaulement 12C s'étend transversalement à la direction axiale X. En d'autres termes, dans cet exemple, l'épaulement 12C s'étend selon la direction radiale R et circonférentielle C. La première portion de raccord 12A forme ainsi une marche recevant une deuxième portion de raccord 14A de la deuxième partie 14.

Lors de la première étape représentée sur la figure 1, on approche les première et deuxième partie 12 et 14 selon la direction axiale X, comme indiqué par les flèches I, jusqu'à ce que la deuxième partie 14 coopère en butée contre l'épaulement 12C, de manière à faire se chevaucher la première portion de raccord 12A et la deuxième portion de raccord 14A.

Selon une première variante représentée sur la figure 2A, la deuxième portion de raccord 14A est pourvue d'au moins un trou traversant 14B avant la première étape. Le trou traversant 14B s'étend selon la direction radiale R et débouche sur la première portion de raccord 12A. Dans cet exemple, le trou traversant 14B est de forme tronconique, la paroi latérale 14B3 étant uniformément inclinée par rapport à l'axe Att, en formant un convergent selon la direction radiale vers la première portion de raccord 12A. Toute autre forme de trou traversant est envisageable. Dans cet exemple, la première portion de raccord 12A ne présente pas de trou borgne, mais pourrait comprendre un trou borgne, formé avant la première étape, ou bien après la première étape comme décrit ci-après en référence à la deuxième variante de la figure 2B.

Selon une deuxième variante représentée sur la figure 2B, la deuxième portion de raccord 14A n'est pourvue d'aucun trou traversant avant la première étape. On forme au moins un trou traversant 14B après la première étape, par exemple à l'aide d'un foret F. Dans cet exemple, lors du perçage du trou traversant 14B dans la deuxième portion de raccord 14A, on perce également un trou borgne 12B dans la première portion de raccord 12A, dans le prolongement du trou traversant 14B. Le trou traversant 14B et le trou borgne 12B s'étendent selon la direction radiale R. Le trou traversant 14B est similaire à celui décrit en référence à la figure 2A. Le trou borgne 12B présente un axe géométrique Atb qui s'étend selon la direction radiale entre une entrée 12B1 et un fond 12B2, et présente une paroi latérale 12B3 s'étendant entre l'entrée 12B1 et le fond 12B2. Dans cet exemple, le trou borgne 12B est de forme tronconique, la paroi latérale 12B3 étant uniformément inclinée par rapport à l'axe Atb, en formant un convergent depuis l'entrée 12B1 vers le fond 12B2. Toute autre forme de trou borgne est envisageable. Selon une variante, le trou borgne 12B est présent avant la première étape, mais pas le trou traversant 14B.

On forme ensuite une couche de protection 18 au moins sur la paroi latérale 14B3 du trou traversant 14B. La couche de protection 18 peut par exemple être formée selon le premier mode de réalisation ou selon le deuxième mode de réalisation décrits ci-après.

Selon le premier mode de réalisation, on dispose par exemple au cours d'une deuxième étape, comme cela est représenté sur les figures 3A et 3B, une feuille métallique 18A sur la deuxième portion de raccord 14A, à l'opposé de la première portion de raccord 12A, et on emboutit ensuite la feuille métallique 18A de manière à ce qu'elle vienne épouser les parois du trou 14B (figure 3A, première variante) ou les parois des trous 14B et 12B (figure 3B, deuxième variante). Sur les figures 2A et 2B, la feuille métallique 18A emboutie est représentée en traits discontinus. Dans cet exemple, la feuille 18A est en cuivre.

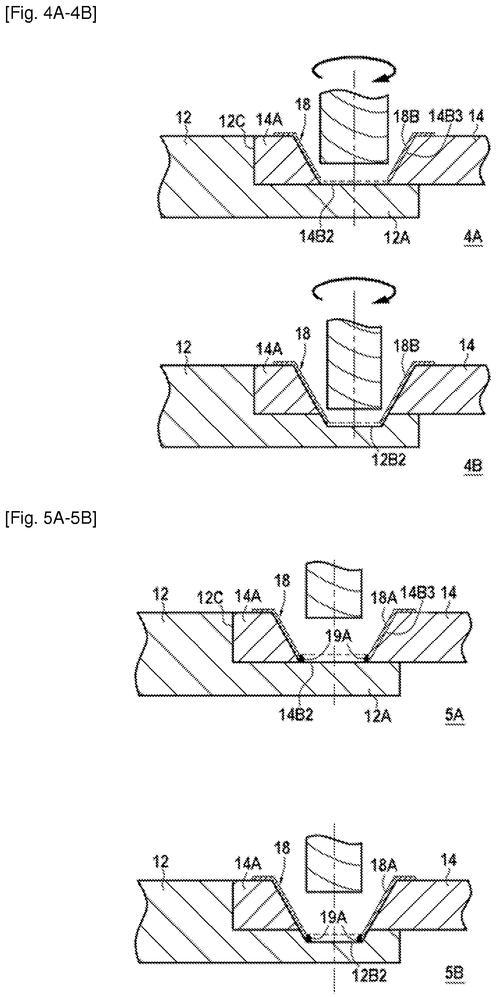

Par la suite, au cours d'une troisième étape, on vient usiner la portion de la feuille métallique 18B qui s'étend sur le fond du trou, dans cet exemple par fraisage, comme cela est représenté sur les figures 4A et 4B, de manière à laisser apparaitre la première portion de raccord 12A au fond des trous. En d'autres termes, après usinage, les fonds 14B2 / 12B2 des trous sont formées par la première portion de raccord 12A. Sur les figures 4A et 4B, les parties usinées et retirée de la feuille métallique 18A sont représentées en traits discontinus.

Sur la figure 4A la première portion de raccord 12A ne présente pas de trou borgne (cf. première variante) et la couche de protection 18 s'étend sur toute la hauteur radiale du trou traversant 14B, jusqu'à la première portion de raccord 12A. Sur la figure 4B la première portion de raccord 12A présente un trou borgne 12B (cf. deuxième variante) et la couche de protection 18 s'étend sur toute la hauteur radiale du trou traversant 14B et du trou borgne 12B, jusqu'au fond 12B2 du trou borgne 12B.

Ensuite, on forme au cours d'une quatrième étape un joint d'étanchéité 19 entre la couche de protection 18 est la première portion de raccord 12A, comme cela est représenté sur les figures 5A (première variante) et 5B (deuxième variante). Dans cet exemple, le joint 19A est formé par dépôt arc-fil, le joint 19A entre la feuille métallique 18A et la première partie de raccord 12A. Dans cet exemple, le métal utilisé pour former le joint est en cuivre ou en alliage à base de cuivre.

Le dépôt arc-fil recouvrant le fond 14B2/12B2 des trous, on usine ensuite, de manière similaire à la troisième étape ci-avant, le dépôt arc-fil de manière à laisser apparaitre la première portion de raccord 12A au fond des trous, en prenant soin de ne pas altérer le joint 19A s'étendant entre la feuille métallique 18A et le première partie de raccord 18A. Par exemple, le diamètre de la fraise utilisée pour cette étape est plus petit que celui de la fraise utilisée pour la troisième étape. Sur les figures 5A et 5B, les parties usinées et retirée du dépôt arc-fil sont représentées en traits discontinus..

Selon le deuxième mode de réalisation, représenté sur les figures 6A, 6B, 6C et 6D, on forme simultanément la couche de protection 18 et un joint 19B par dépôt arc-fil. Plus précisément dans cet exemple, on réalise un premier dépôt arc-fil selon la direction circonférentielle C en formant une ou plusieurs bandes annulaires 18B1 selon la largeur axiale désirée , comme cela est représenté sur la figure 6A. Ce premier dépôt 18B1 est dans cet exemple en cuivre. Les parois latérales 14B3 des trous traversant 14B sont recouvertes sur toute leur hauteur radiale. Dans cet exemple, la surface de la première portion de raccord 12A apparente au travers des trous traversant 14B est aussi recouverte. On réalise ensuite un deuxième dépôt CGS selon la direction circonférentielle C en formant une ou plusieurs bandes annulaires 18B2 selon la largeur axiale désirée, recouvrant, dans cet exemple partiellement, les bandes circonférentielles 18B1. La bande annulaire 18B2 s'étend sur toute la périphérie extérieure selon la direction circonférentielle C de la deuxième portion de raccord 14A, comme cela est représenté sur la figure 6B, en recouvrant les parois latérales 14B3 des trous traversant 14B sur toute leur hauteur radiale. Dans cet exemple, la surface de la première portion de raccord 12A apparente au travers des trous traversant 14B, recouverte par la bande 18B1, est également recouverte par la bande 18B2. Le deuxième dépôt 18B2 est dans cet exemple en cuivre. Selon une variante, la bande annulaire 18B2 recouvre entièrement les bandes axiales 18B1. Dans ce deuxième mode de réalisation, la couche de protection 18 est donc formée par une couche de dépôt 18B, résultant des bandes 18B1 et 18B2. En formant de telles bandes, la couche de protection 18 s'étend également au voisinage du trou traversant 14B, à l'opposé de la première portion de raccord 12A. Lors des deux dépôts arc-fil et CGS pour former les bandes annulaires, un joint d'étanchéité 19B est réalisé simultanément entre la couche 18B et la première portion de raccord 12A, comme cela est représenté sur les figures 6C (première variante) et 6D (deuxième variante). En effet, la couche de protection 18B est formée en contact avec première portion de raccord 12A. De manière similaire au premier mode de réalisation, on vient usiner ensuite la portion de la couche 18B qui s'étend sur le fond du trou, dans cet exemple par fraisage, comme cela est représenté sur les figures 6C et 6D, de manière à laisser apparaitre la première portion de raccord 12A au fond des trous. En d'autres termes, les fonds 14B2 / 12B2 des trous sont formés par la première portion de raccord 12A. Lors de cette opération on prend soin de ne par alterer la portion 19B formant le joint. Sur les figures 6C et 6D, les parties usinées et retirée sont représentées en traits discontinus.

Enfin, au cours d'une cinquième étape commune au premier et au deuxième mode de réalisation, on forme un élément de fixation 20 par dépôt CGS, comme cela est représenté sur les figures 7A (première variante) et 7B (deuxième variante). Par exemple, l'élément de fixation 20 est fabriqué en alliage métallique par exemple en alliage à base de nickel. L'élément de fixation 20 s'étend au travers du trou traversant 14B, est fixé à la première portion de raccord 12A, (i.e. sur les fonds 14B2, 12B2) et enserre, avec la première portion de raccord 12A, la deuxième portion de raccord 14A. Notamment on note que l'élément de fixation 20 enserre la deuxième portion de raccord 14A, notamment via la paroi latérale 14B3 du trou traversant 14B qui est inclinée par rapport à l'axe Att du trou traversant 14B. En d'autres termes, la paroi latérale 14B3 forme un siège pour l'élément de fixation 20 qui permet de fixer la première partie 12 à la deuxième partie 14. Dans cet exemple, l'interface entre l'élément de fixation 20 et la deuxième portion de raccord 14A s'étendant au voisinage du trou traversant 14B, ce voisinage faisant partie du siège coopérant avec l'élément de fixation 20. L'élément de fixation 20 enserre également la deuxième portion de fixation 14A dans ce voisinage. Selon une variante, il y a autant d'éléments de fixation ponctuels que de trous traversant 14B. Selon une autre variante (non représentée), un unique élément de fixation formant une bride annulaire s'étendant tout autour de la deuxième portion de raccord 14A selon la direction circonférentielle C et dans tous les trous traversant 14B. Selon encore une autre variante (non représentée), l'élément de fixation forme un pontet fixé à la première partie 12 d'une part sur la première portion de raccord 12A via le trou traversant de la deuxième portion de raccord (14A) et d'autre part sur une portion de la première partie autre que la première portion de raccord 12A (par exemple la portion de la première partie 12 à gauche sur les figures 7A et 7B).

La figure 8 représente la pièce 10 résultant de l'assemblage décrit ci-avant. Dans cet exemple, il y a autant d'éléments de fixation 20 que de trous traversant. Dans cet exemple, la pièce 10 est une enveloppe de chambre de combustion de moteur-fusée. Le procédé d'assemblage décrit ci-avant s'inscrit dans cet exemple dans un procédé de fabrication d'une enveloppe de chambre de combustion de moteur-fusée.

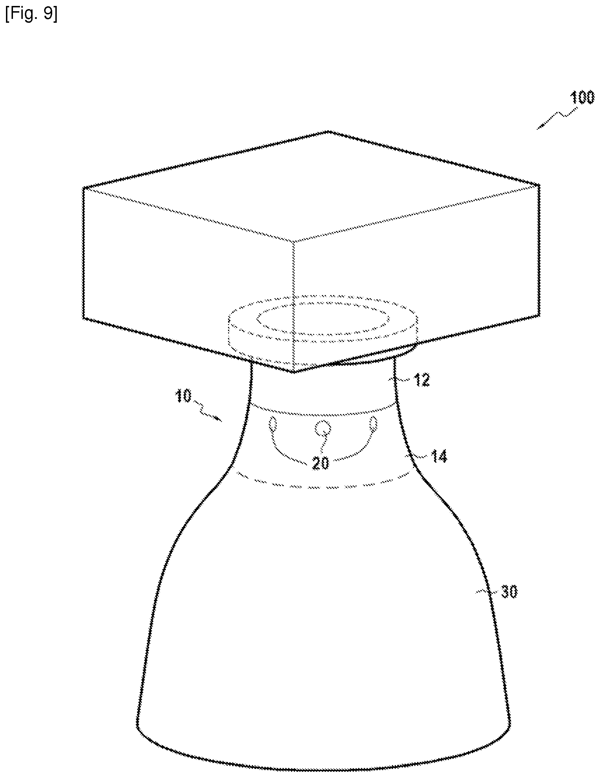

La figure 9 représente un moteur-fusée 100 comprenant l'enveloppe de chambre de combustion 10 débouchant sur une tuyère d'éjection 30.

Bien que la présente invention ait été décrite en se référant à des modes de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Procédé d'assemblage d'une première partie (12) métallique avec une deuxième partie (14) en matériau composite à matrice organique, la première partie (12) présentant une première portion de raccord (12A) et la deuxième partie (14) présentant une deuxième portion de raccord (14B) , le procédé comprenant les étapes de :
- faire se chevaucher la première portion de raccord (12A) et la deuxième portion de raccord (14A), un trou traversant (14B) de la deuxième portion de raccord (14A) débouchant sur la première portion de raccord (21A), le trou traversant (14B) présentant une paroi latérale (14B3),
**caractérisé en ce que** le procédé comprend les étapes de :
- former une couche de protection (18) au moins sur la paroi latérale (14B3) du trou traversant (14B),
- former un joint d'étanchéité (19A, 19B) entre la couche de protection (18) et la première portion de raccord (12A), et
- former par fabrication additive par dépôt par projection de poudre métallique entrainée par un gaz froid un élément de fixation (20) s'étendant dans le trou traversant (14B), fixé sur la première portion de raccord (12A), et enserrant la deuxième portion de raccord (12B).

2. Procédé d'assemblage selon la revendication 1, dans lequel la couche de protection (18) s'étend sur toute l'interface entre la deuxième portion de raccord (14A) et l'élément de fixation (20).

3. Procédé d'assemblage selon la revendication 1 ou 2, dans lequel on forme la couche de protection (18) à l'aide d'une feuille métallique (18A).

4. Procédé d'assemblage selon la revendication 3, dans lequel on forme le joint d'étanchéité (19A) entre la feuille métallique et la première portion de raccord par dépôt métallique du type fabrication additive par dépôt métallique arc-fil.

5. Procédé d'assemblage selon la revendication 1 ou 2, dans lequel on forme simultanément la couche de protection (18) et le joint d'étanchéité (19B) par au moins un dépôt métallique du type fabrication additive par dépôt métallique arc-fil.

6. Procédé d'assemblage selon la revendication 5, on forme simultanément la couche de protection (18) et le joint d'étanchéité (19B) par au moins deux dépôts métalliques, un premier dépôt (18B1) étant un dépôt métallique du type fabrication additive par dépôt métallique arc-fil, et un deuxième dépôt (18B2) étant un dépôt par projection de poudre métallique entrainée par un gaz froid réalisé sur le premier dépôt (18B1), le deuxième dépôt étant distinct de l'étape de fabrication additive par dépôt par projection de poudre métallique entrainée par un gaz froid pour former l'élément de fixation (20).

7. Procédé de fabrication d'une enveloppe de chambre de combustion de moteur-fusée (10) comprenant le procédé d'assemblage selon l'une quelconque des revendications 1 à 6.

8. Pièce comprenant une première partie (12) métallique et une deuxième partie (14) en matériau composite à matrice organique assemblées l'une à l'autre par le procédé d'assemblage selon l'une quelconque des revendications 1 à 6.

## Patentansprüche

1. Verfahren zum Zusammenbau eines ersten metallischen Teils (12) mit einem zweiten Teil (14) aus Verbundmaterial mit organischer Matrix, wobei das erste Teil (12) einen ersten Verbindungsabschnitt (12A) und das zweite Teil (14) einen zweiten Verbindungsabschnitt (14B) aufweist, wobei das Verfahren die folgenden Schritte umfasst:
- Überlappen des ersten Verbindungsabschnitts (12A) und des zweiten Verbindungsabschnitts (14A), wobei ein Durchgangsloch (14B) des zweiten Verbindungsabschnitts (14A) auf den ersten Verbindungsabschnitt (21A) mündet, wobei das Durchgangsloch (14B) eine Seitenwand (14B3) aufweist,
**dadurch gekennzeichnet, dass** das Verfahren die folgenden Schritte umfasst:
- Bilden einer Schutzschicht (18) zumindest auf der Seitenwand (14B3) des Durchgangslochs (14B),
- Bilden einer Dichtung (19A, 19B) zwischen der Schutzschicht (18) und dem ersten Verbindungsabschnitt (12A), und
- Bilden eines Befestigungselements (20) durch additive Fertigung mittels Kaltgas-Metallpulverauftrag, das sich in dem Durchgangsloch (14B) erstreckt, an dem ersten Verbindungsabschnitt (12A) befestigt ist und den zweiten Verbindungsabschnitt (12B) umschließt.

2. Zusammenbauverfahren nach Anspruch 1, wobei sich die Schutzschicht (18) über die gesamte Schnittstelle zwischen dem zweiten Verbindungsabschnitt (14A) und dem Befestigungselement (20) erstreckt.

3. Zusammenbauverfahren nach Anspruch 1 oder 2, wobei die Schutzschicht (18) mittels eines Metallblechs (18A) gebildet wird.

4. Zusammenbauverfahren nach Anspruch 3, wobei die Dichtung (19A) zwischen dem Metallblech und dem ersten Verbindungsabschnitt durch metallisches Auftragen vom Typ additive Fertigung mittels Lichtbogen-Draht-Metallauftrag gebildet wird.

5. Zusammenbauverfahren nach Anspruch 1 oder 2, wobei die Schutzschicht (18) und die Dichtung (19B) gleichzeitig durch mindestens einen Metallauftrag vom Typ additive Fertigung mittels Lichtbogen-Draht-Metallauftrag gebildet werden.

6. Zusammenbauverfahren nach Anspruch 5, wobei die Schutzschicht (18) und die Dichtung (19B) gleichzeitig durch mindestens zwei Metallaufträge gebildet werden, wobei ein erster Auftrag (18B1) ein Metallauftrag vom Typ additive Fertigung mittels Lichtbogen-Draht-Metallauftrag ist und ein zweiter Auftrag (18B2) ein Auftrag durch Kaltgas-Metallpulverauftrag ist, der auf dem ersten Auftrag (18B1) ausgeführt wird, wobei sich der zweite Auftrag von dem Schritt der additiven Fertigung mittels Kaltgas-Metallpulverauftrag zur Bildung des Befestigungselements (20) unterscheidet.

7. Verfahren zur Herstellung einer Brennkammerhülle eines Raketentriebwerks (10), welches das Zusammenbauverfahren nach einem der Ansprüche 1 bis 6 umfasst.

8. Bauteil, umfassend ein erstes metallisches Teil (12) und ein zweites Teil (14) aus Verbundmaterial mit organischer Matrix, die miteinander durch das Zusammenbauverfahren nach einem der Ansprüche 1 bis 6 verbunden sind.

## Claims

1. A method for assembling a first metal part (12) with a second part (14) made of an organic matrix composite material, the first part (12) having a first connecting portion (12A) and the second part (14) having a second connecting portion (14B), the method comprising the steps of:
- causing the first connecting portion (12A) and the second connecting portion (14A) to overlap, a through-hole (14B) of the second connecting portion (14A) opening onto the first connecting portion (21A), the through-hole (14B) having a side wall (14B3),
**characterized in that** the method comprises the steps of:
- forming a protective layer (18) at least on the side wall (14B3) of the through-hole (14B),
- forming a seal (19A, 19B) between the protective layer (18) and the first connecting portion (12A), and
- forming, by additive manufacturing using cold gas spray deposition of metal powder, a fastening element (20) which extends into the through-hole (14B), fastened to the first connecting portion (12A) and enclosing the second connecting portion (12B).

2. The assembly method according to claim 1, wherein the protective layer (18) extends over the entire interface between the second connecting portion (14A) and the fastening element (20).

3. The assembly method according to claim 1 or 2, wherein the protective layer (18) is formed using a metal sheet (18A).

4. The assembly method according to claim 3, wherein the seal (19A) is formed between the metal sheet and the first connecting portion by metal disposition by metal arc wire additive manufacturing.

5. The assembly method according to claim 1 or 2, wherein the protective layer (18) and the seal (19B) are formed simultaneously by at least one metal deposition by metal arc wire additive manufacturing.

6. The assembly method according to claim 5, wherein the protective layer (18) and the seal (19B) are formed simultaneously by at least two metal depositions, a first deposition (18B1) being a metal deposition by metal arc wire additive manufacturing, and a second deposition (18B2) being a cold gas spray deposition of metal powder carried out on the first deposition (18B1), the second deposition being distinct from the step of additive manufacturing using cold gas spray deposition of metal powder, in order to form the fastening element (20).

7. The method for manufacturing a rocket engine combustion chamber jacket (10) comprising the assembly method according to any one of claims 1 to 6.

8. A piece comprising a first metal part (12) and a second part (14) made of organic matrix composite material assembled together by the assembly method according to any one of claims 1 to 6.
